# EUROPEAN PATENT SPECIFICATION

(11) **EP 1 835 666 B1**
(45) Date of publication and mention of the grant of the patent: **05.11.2014**
(21) Application number: 05820081.7
(22) Date of filing: 22.12.2005
(51) Int. Cl.: H04L 12/751, H04L 12/707, H04L 12/721

(54) **COMMUNICATION DEVICE, ROUTING METHOD, AND PROGRAM**
KOMMUNIKATIONSGERÄT, ROUTING-VERFAHREN UND PROGRAMM
DISPOSITIF DE COMMUNICATION, PROCEDE DE ROUTAGE ET PROGRAMME

(30) Priority: 05.01.2005 JP 2005000998
(43) Date of publication of application: 19.09.2007
(73) Proprietor: NEC Corporation, Minato-ku Tokyo 108-8001 (JP)
(72) Inventor: NOGUCHI, Yusuke, NEC Corporation, Tokyo, 1088001 (JP)
(74) Representative: Stork Bamberger
(86) International application number: PCT/JP2005/023599
(87) International publication number: WO 2006/073066

(56) References cited:
- JP-A- 2000 115 230
- JP-A- 2000 332 813
- JP-A- 2004 088 658
- US-B1- 6 249 521
- US-B1- 6 654 369

## Description

The present invention relates to a communication device, a communication method, and a program of a communication device.

### [BACKGROUND ART]

A plurality of communication routes are usually connected to a relay node etc. of a computer network, and conventionally, upon receipt of a packet, the relay node particularly selects the communication route, which is to be used, from among a plurality of the communication routes only based upon a destination address out of route information that is contained in the above packet, and transmits the packet to the next node.

By the way, in most cases, the characteristic of the communication route, i.e. a delay time, a bandwidth, a circuit quality, a charge, etc., which is not always identical, differs from communication route to communication route. Accordingly, in a case where a plurality of the routes each having a different characteristic such as a delay time, a bandwidth, a circuit quality, and a charge are selectable for a certain destination address, it is preferable that the most desirable route for the packets each having an identical address can be selected responding to a kind of an application, a transmission source address, etc. thereof.

However, as mentioned previously, the conventional relay node selects the communication route that is to be used, only based upon the destination address of the received packet, whereby it follows that the identical communication route is selected for the packets each having an identical destination address, which gives rise to the problem that the route cannot be selected responding to the kind of the application, the transmission source address, etc.

Thereupon, the communication route selection technology for enabling the most desirable route to be selected has been proposed (For example, Patent document 1).
Patent document 1: JP-P2000-115230A

Document US 6 654 369 B1 discloses a method for directing the route of a cell transmitting a network. According to the method disclosed in document US 6 654 369 B1 explicit routing or destination routing or a combination of both routing techniques is used. The method comprises the steps of receiving the cell including a first address and a final address, routing the cell if the first address is a predetermined global address or the address of a device and routing the cell based on the final destination address if the first address is not equal to the predetermined global address or the address of the device (destination address routing).

### [DISCLOSURE OF THE INVENTION]

### [PROBLEMS TO BE SOLVED BY THE INVENTION]

With the foregoing technology, the transmission source address of the selected route, for example, the selected communication interface can be designated. That is, in a case where the transmission source address can be designated in generating the packet, the designated communication interface can be selected.

However, the problem exists that under the environment of co-existence with the packet that does not designate the transmission source address as is the case with the conventional way, the communication interface designated at the time of routing is not reflected into the selection, and the communication interface is selected in response only to the destination address.

Thereupon, the present invention has been accomplished in consideration of the above-mentioned problems, and an object thereof is to provide a communication device, a routing method, and a program that enable an appropriate communication interface to be selected even under the environment in which the packet that does not designate the communication interface and the packet that designates the communication interface coexist.

### [MEANS TO SOLVE THE PROBLEM]

The first invention for solving the above-mentioned problems is a communication device with the features of claim 1.

The second invention for solving the above-mentioned problems is characterized in that, in the above-mentioned first invention, each separate address is an IP address.

The third invention for solving the above-mentioned problems is a method in a communication device with the features of claim 3.

The fourth invention for solving the above-mentioned problems is characterized in that said each separate address is an IP address.

The fifth invention for solving the above-mentioned problems is a program of a communication device with the features of claims 5.

The sixth invention for solving the above-mentioned problems is characterized in that, in the above-mentioned fifth invention, said each separate address is an IP address.

In the present invention, an address of each communication interface that the communication device includes, and a destination address of its communication interface are pre-stored in the table correspondingly to each other.

When the packet is received, the communication interface corresponding to the destination address of its packet is selected from the table. And, in a case where the received packet contains information of designating the transmission source address or the communication interface, the communication interface corresponding to the transmission source address or the communication interface is selected from among the selected communication interfaces, and the received packet is sent out to its communication interface.

On the other hand, in a case when the received packet contains no information on the transmission source address or the communication interface, the arbitrary communication interface is selected from among the selected communication interfaces, and the received packet is sent out to the selected communication interface.

### [EFFECTS OF THE INVENTION]

The present invention exhibits an excellent effect that even in the case of a network configuration in which the communication device is equipped with a plurality of the communication interfaces, and yet a separate address has been assigned to each communication interface, utilizing the decided route (communication interface) enables the packet to be transmitted, and on the other hand, the routing process can be performed for the packet as well, into which the transmission source address has not been filed in particular, and which expects the routing by the prior art.

### [BRIEF DESCRIPTION OF THE DRAWINGS]

[Fig. 1] Fig. 1 shows an example of a configuration in the case that the communication interface has a separate IP address.
[Fig. 2] Fig. 2 is a view illustrating one example of an inner configuration of a transmission node 100-2 in a system of Fig. 1.
[Fig. 3] Fig. 3 is a view indicating a configuration of an IP routing processing unit 1318.
[Fig. 4] Fig. 4 is a view illustrating one example of a route control table 1321.
[Fig. 5] Fig. 5 is a view illustrating one example of an IF address management table 1322.
[Fig. 6] Fig. 6 is a view having one example shown of a route ⇔ communication-interface correspondence table 1330 that is preserved in a memory unit 315-2.
[Fig. 7] Fig. 7 is a view illustrating a configuration of transmission IP packet generation data 1510.
[Fig. 8] Fig. 8 is a view illustrating a configuration of a sending-out IP packet 1610.
[Fig. 9] Fig. 9 is a flowchart for deciding a transmission IF by a transmission IF determination/sending-out processing unit 1320.
[Fig. 10] Fig. 10 is a view illustrating another transmission IP packet generation data.
[Fig. 11] Fig. 11 is a view illustrating another sending-out IP packet.
[Fig. 12] Fig. 12 is another flowchart for deciding the transmission IP by the transmission IF determination/sending-out processing unit 1320.
[Fig. 13] Fig. 13 is a view illustrating one example of an entry of the route control table 1321.

### [DESCRIPTION OF NUMERALS]

312-2 queuing unit
313-2 scheduling unit
314 route state monitoring unit
315-2 memory unit
1316 IP packet generation unit
1317 IP packet queuing unit
1318 IP routing processing unit

### [BEST MODE FOR CARRYING OUT THE INVENTION]

Embodiments of the present invention will be explained.

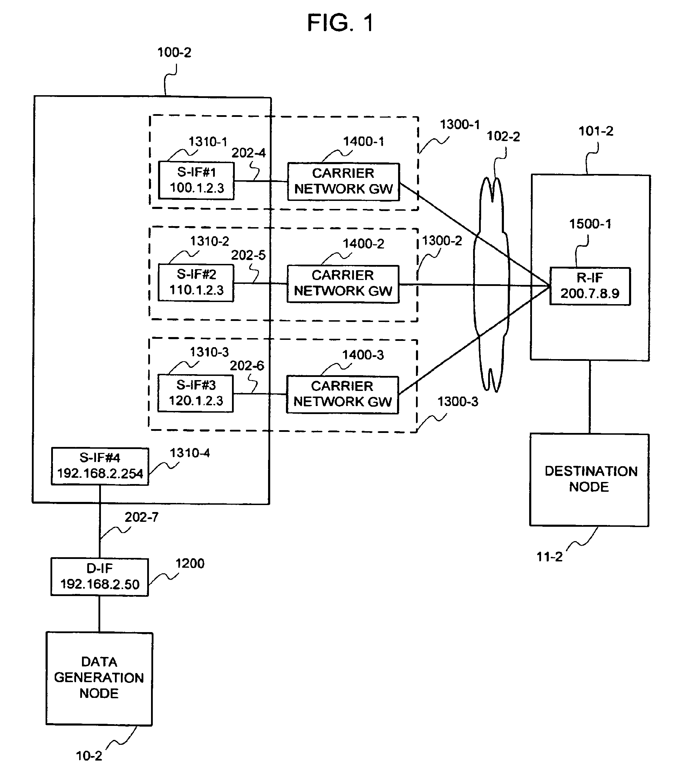

Fig. 1 shows an example of, in this embodiment, a configuration in the case that the communication interface includes a separate IP address.

In Fig. 1, there exist a transmission node 100-2 and a reception node 101-2 each having a plurality of the routes on the route ranging from a data generation node 10-2 up to a destination node 11-2. There exist three routes between the transmission node 100-2 and the reception node 101-2. In the configuration example of Fig. 1, the transmission node 100-2 is equipped with S-IF#1 1310-1, S-IF#2 1310-2, S-IF#3 1310-3, and S-IF#4 1310-4, each of which is a communication interface, as a transmission means. The communication interfaces S-IF#1 1310-1 to S-IF#3 1310-3, which belong to different wireless networks 1300-1 to 1300-3, are connected to carrier network gateways 1400-1 to 1400-3 that are positioned within a cellular carrier network via wireless links 202-4 to 202-6, respectively. Further, the communication interface S-IF#4 1310-4 is connected to D-IF 1200, being a communication interface mounted onto the data generation node 10-2, via a wire or a wireless link 202-7. Further, the reception node 101-2 is equipped with R-IF 1500-1, being a communication interface, as a reception means. The reception node 101-2 is connected to each of the carrier network gateways 1400-1 to 1400-3 via a communication interface R-IF 1500-1 and a wire network 102-2.

In a system of Fig. 1, "100.1.2.3", "110.1.2.3", and "120.1.2.3" have been assigned to the communication interfaces S-IF#1 1310-1 to S-IF#3 1310-3 as a separate IP address by employing a means such as Point to Point Protocol (PPP), respectively. Further, "200.7.8.9" has been assigned to the communication interface R-IF 1500-1 as an IP address by setting in a fixed manner or by employing a means such a DHCP. In addition hereto, "192.168.2.50" has been assigned to the communication interface D-IF 1200 as an IP address by setting in a fixed manner or by employing a means such as DHCP.

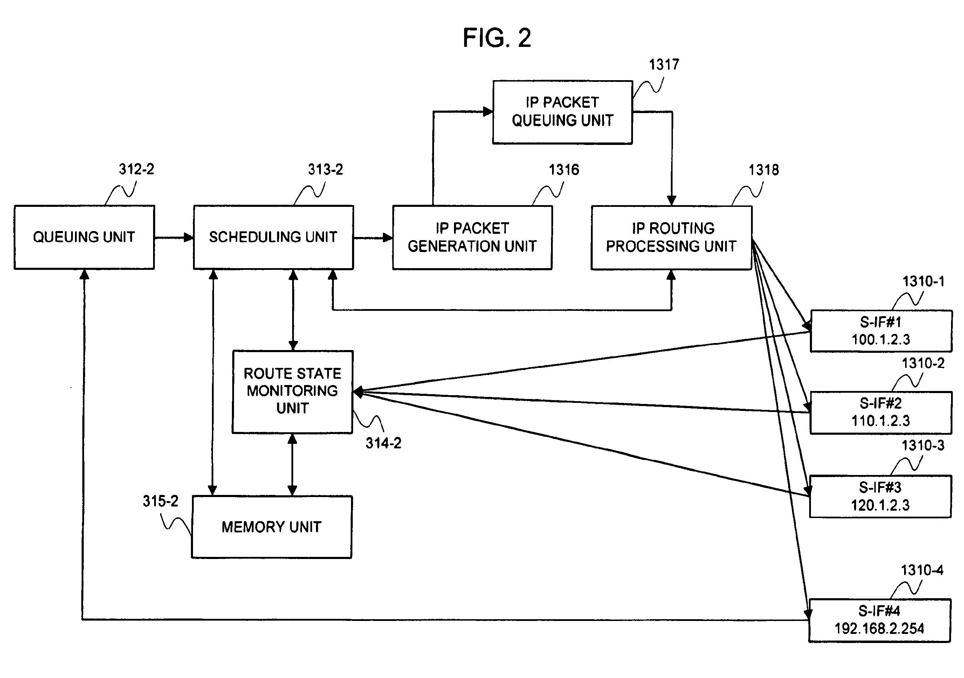

Herein, in Fig. 2, one example of an inner configuration of the transmission node 100-2 in a system of Fig. 1 is shown. The transmission node 100-2 is configured of a packet queuing unit 312-2, a scheduling unit 313-2, a route state monitoring unit 314-2, a memory unit 315-2, an IP packet generation unit 1316, an IP packet queuing unit 1317, and an IP routing processing unit 1318 for a purpose of making IP communication.

The scheduling unit 313-2 takes out input data (a destination address and transmission data) from the packet queuing unit 312-2, and selects a specific communication interface. A selection of the communication interface (route) that is employed for transferring the taken-out data is made by making a reference to the state of the route that the route state monitoring unit 314-2 manages. The route state monitoring unit 314-2 determines the state of the route by use of the existing route selection method or a novel route selection method. Additionally, information on the route state is filed into the memory unit 315-2.

The IP packet generation unit 1316 is for adding an IP header to the data received from the scheduling unit 313-2, thereby to generate an IP packet. Further, the IP packet queuing unit 1317 is a buffer for accumulating the IP packet generated by the IP packet generation unit 1316. Further, the IP routing processing unit 1318 is for taking out the IP packet accumulated in the IP packet queuing unit 1317, determining the next transferee of the IP packet, and sending out the IP packet by using an appropriate one out of the communication interfaces S-IF#1 1310-1 to S-IF#4 1310-4.

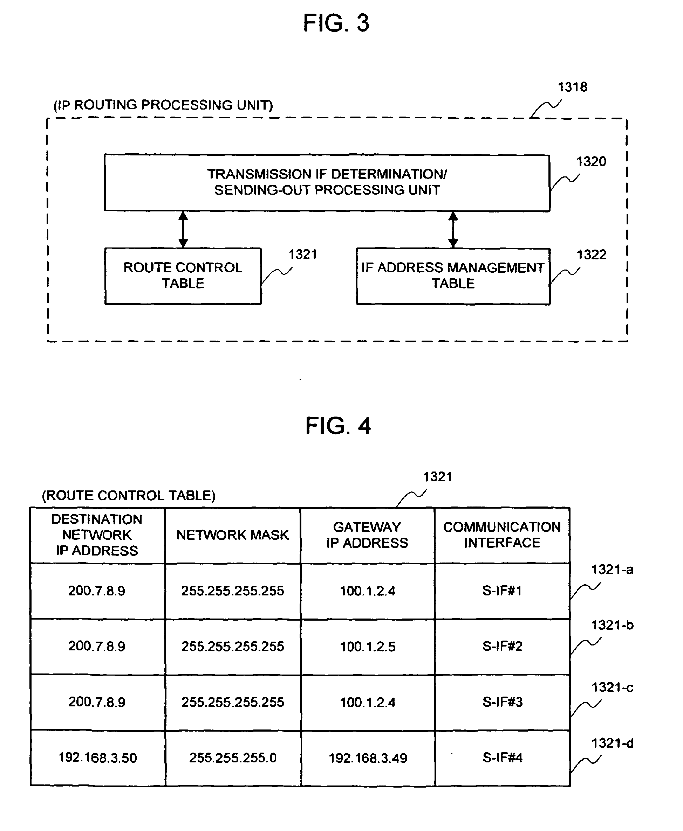

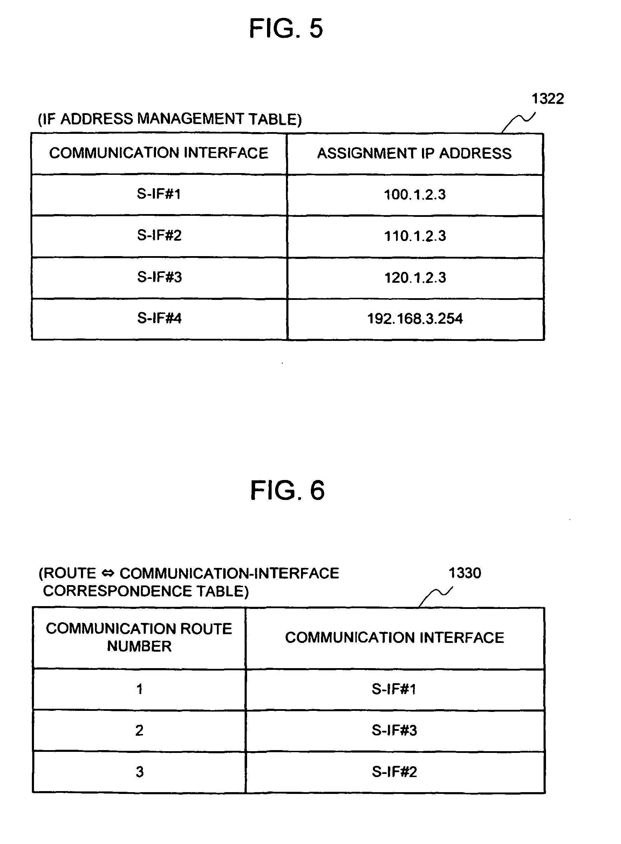

Fig. 3 shows a configuration of the IP routing processing unit 1318. The IP routing processing unit 1318 is provided with a route control table 1321 (shown in Fig. 4) that is used for determining the transferee of the delivered IP packet. Further, it is provided with an IF address management table 1322 (shown in Fig. 5) into which the IP address assigned to each mounted communication interface has been recorded. And, it is provided with a transmission IF determination/sending-out processing unit 1320 for using the route control table 1321 and IF address management table 1322, thereby to determine the transferee of the IP packet delivered to the IP routing processing unit 1318, and sending the above IP packet to the corresponding communication interfaces S-IF#1 1310-1 to S-IF#4 1310-4.

Fig. 6 shows one example of a table (hereinafter, referred to as a route ⇔ communication-interface correspondence table 1330) preserving a correspondence between a communication route and a communication interface corresponding hereto, which is preserved in the memory unit 315-2. A communication route number, being an identifier of each communication route that is sensed by the scheduling unit 313-2 and the route state monitoring unit 314-2, and information on a communication interface name that is utilized for making a connection to each communication route have been filed into each entry of the route ⇔ communication-interface correspondence table 1330.

A network mask and a gateway IP address for indicating the next transferee for a purpose of allowing the IP packet to arrive at its network, as a rule, have been described in the route control table 1321 shown in Fig. 4 for each destination network IP address that becomes a transmission destination of the IP packet. And, information indicating the communication interface connected to a sub-network having the gateway IP address identical hereto has been recorded. Additionally, as a matter of fact, in addition, there is the case that a multicast address etc. is set for transmitting to all communication appliances belonging to an identical sub-network; however illustration and explanation thereof are omitted.

A correspondence between a communication interface mounted onto the transmission node and an IP address assigned hereto have been recorded in the IF address management table 1322 shown in Fig. 5. The content of the IF address management table 1322 is updated whenever the IP address that is assigned to each communication interface is changed.

In this embodiment, the reception node 101-2 is equipped with only R-IF 1500-1, being a single communication interface, as a reception means, whereas the transmission node 100-2 is equipped with S-IF#1 1310-1 to S-IF#4 1310-4 to which a separate IP address has been assigned respectively, being a communication interface. For this, there exist the entries 1321-a, 1321-b, and 1321-c each having an identical value of the destination network IP address, being "200.7.8.9", into which a different gateway IP address and communication interface have been registered, respectively, in the route control table 1321. Further, there also exists 1321-d, being information on the route to the data generation node 10-2 in the route control table 1321.

The transmission IF determination/sending-out processing unit 1320 executes a process of employing header information of the received IP packet and the route control table 1321 to decide the interface that is used for sending out the IP packet, which is referred to as a so-called IP routing.

In this embodiment, as shown in Fig. 4, the entry having the repeated "destination network IP address" exists in plural, and the IP routing process is for deciding the interface that is used for sending out the IP packet.

Thereafter, in this embodiment shown in Fig. 1, an example is shown of the case of employing S-IF#2 202-5, being a communication interface corresponding to the decided route, to send out the IP packet on the assumption that the route registered into the route ⇔ communication-interface correspondence table 1330, of which the communication route number is "3", has been selected as a communication route in the scheduling unit 313-2. Also in the case that another route has been selected, it can be realized with the similar process.

When the scheduling unit 313-2 selects the route of which the communication route number is "3" as a communication route, it acquires "S-IF#2", being a communication interface name corresponding to the above communication route, from the route ⇔ communication-interface correspondence table 1330.

Next, it searches the IF address management table 1322 that exists within the IP routing processing unit 1318 with the acquired communication interface name "S-IF#2" assumed to be a key, and acquires the IP address "110.1.2.3" assigned to S-IF#2. Next, the scheduling unit 313-2 prepares information (hereinafter, referred to as transmission IP packet generation data) for generating the transmission IP packet, and delivers it to the IP packet generation unit 1316.

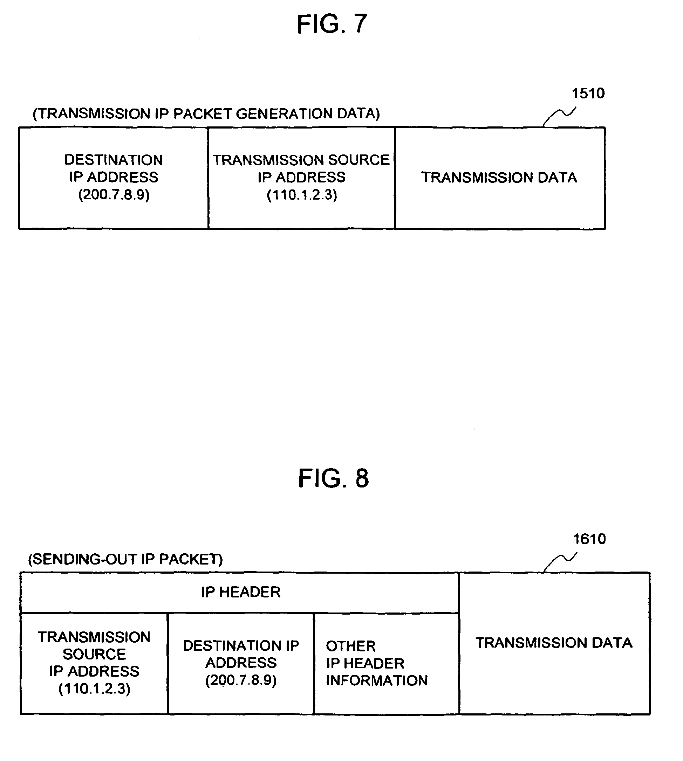

In Fig. 7, a configuration of transmission IP packet generation data 1510 is shown. The IP address "200.7.8.9" of the communication interface 1500-1 of the reception node 101-2, and "110.1.2.3", being an IP address of the communication interface S-IF#2 1310-2, are filed as "a destination IP address" and "a transmission source IP address", respectively.

The IP packet generation unit 1316 prepares a sending-out IP packet 1610 shown in Fig. 8 based upon the received transmission IP packet generation data 1510, and adds it to the IP packet queuing unit 1317. In the sending-out IP packet 1610, based upon information that is contained in the received transmission IP packet generation data 1510, the IP address "110.1.2.3" of S-IF#2 1310-2, being a communication interface, and the IP address "200.7.8.9" of R-IF 1500-1, being a communication interface of the reception node 101-2, are filed into a "transmission source IP address" field of the IP header, and a "destination IP address" field of the IP header, respectively.

Next, the transmission IF determination/sending-out processing unit 1320 that exists in the IP routing processing unit 1318 takes out the sending-out IP packet 1610 from the IP packet queuing unit 1317, employs the route control table 1321 and the IF address management table 1322 to decide the communication interface through which the sending-out IP packet is delivered, and executes the sending-out process.

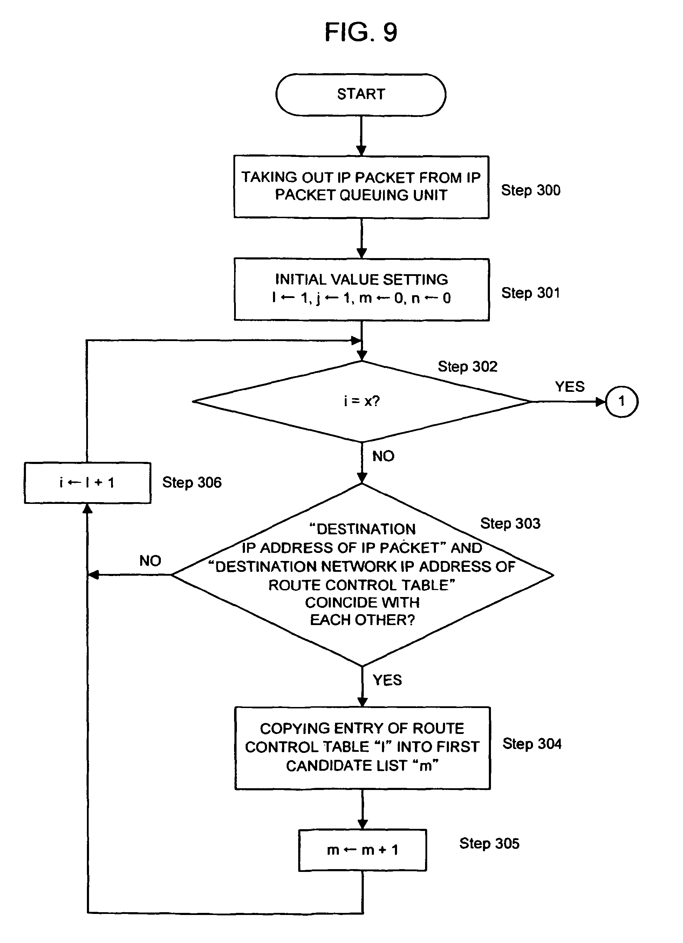

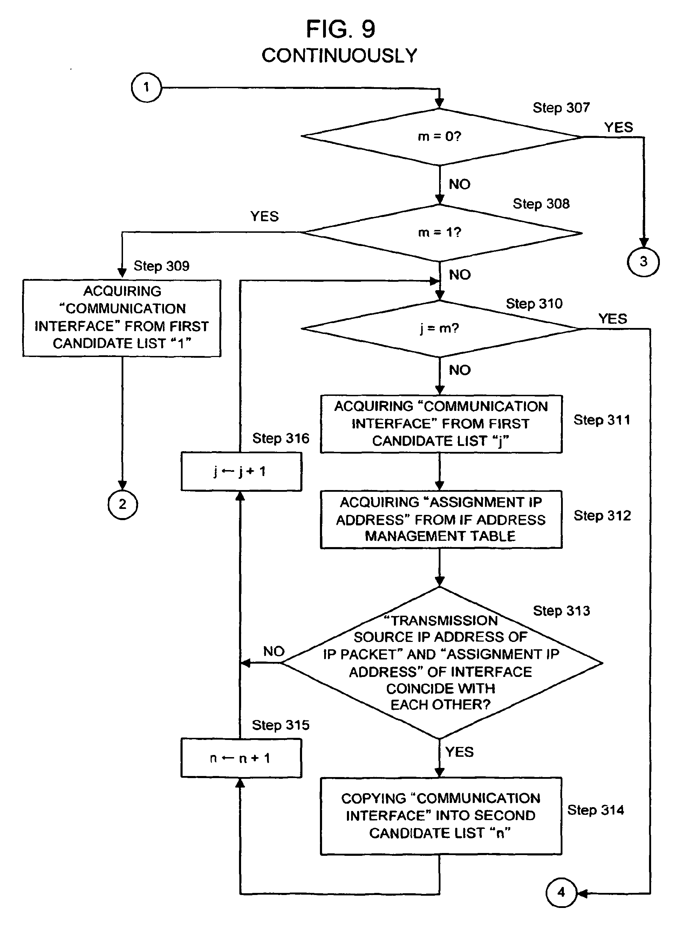

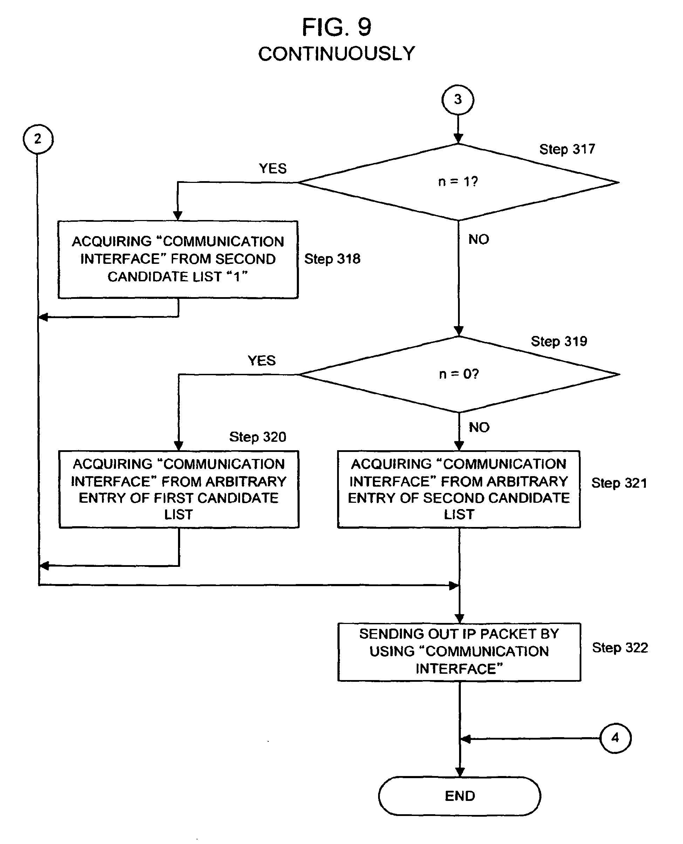

Fig. 9 signifies a flow of deciding the transmission IF by the transmission IF determination/sending-out processing unit 1320 in this embodiment. When the route control table 1321 in use is configured of the entry number x, the transmission IF determination/sending-out processing unit 1320 prepares as a variable a count value i indicating which entry of the route control table 1321 is assumed to be an object of the process in terms of the entry order in performing a search process under a first condition, a first candidate list, being an array into which the entries of the route control table selected as a transmission candidate under the first condition are filed, a count value m indicating the number of the entries filed into the first candidate list, a count value j indicating which entry of the first candidate list is assumed to be an object of the process in terms of the entry order in performing a selection process under a second condition, a second candidate list, being an array into which the transmission interfaces selected as a transmission candidate under the second condition are filed, and a count value n indicating the number of the entries filed into the second candidate list. At first, it takes out the sending-out IP packet 1610 from the IP packet queuing unit 1317 (Step 300). And, it sets "1" to the count values i and j, respectively, and "0" to the count values m and n, respectively, as an initial value (Step 301), and the operation proceeds to a step 302.

Next, it compares the count value i with x, and determines whether the first candidate search has been completed (Step 302). Specifically, if the value i becomes equalized to the value of x, it follows that the first candidate search has been completed. In a case where the value i is not equal to the value of x (Step 302: NO), it compares the value filed into the destination IP address of the sending-out IP packet 1610 with the value filed into the destination network IP address of the i-th entry of the route control table (Step 303). In a case where they coincide with each other as a result of the comparison (Step 303: YES), it copies the content of the i-th entry of the route control table into the m-th entry of the first candidate list (Step 304). And, it increases the value of the count value m by 1 (Step 305). Further, it increases the value of the count value i by 1 (Step 306), and the operation shifts to the process of the next route control table entry. In a case where the value filed into the destination IP address of the sending-out IP packet 1610 and the value filed into the destination network IP address of the i-th entry of the route control table do not coincide with each other (Step 303: NO), the operation proceeds to a Step 306 as it stands.

Repeating the steps from the Step 302 to the Step 306 allows each entry to be processed in the ascending order beginning with the first entry of the route control table. And, when the process of the final entry is reached (Step 302: YES), the operation proceeds to a Step 307 for a purpose of determining whether the entry exists in the first candidate list.

It is determined whether the first candidate exists, specifically, based upon the value of the count value m. In a case where the value of the count value m is "0" (Step 307: YES), the communication interface for sending out the sending-out IP packet 1610 does not exist, whereby the process is ended (END). In a case where the value of the count value m is a value other than "0" (Step 307: NO), it follows that the first candidate exists, whereby the operation proceeds to the process of a Step 308. Next, it determines whether the count value m is "1" (Step 308). In a case where the value of the count value m is "1" (Step 308: YES), the communication interface for sending out the sending-out IP packet 1610 is decided uniquely, whereby the transmission IF determination/sending-out processing unit 1320 acquires the communication interface recorded in the first entry of the first candidate list (Step 309), and employs the acquired communication interface to send out the sending-out IP packet 1610 (Step 322), and the operation is ended (END). In a case where the value of the count value m is not "1" (Step 308: NO), the communication interface for sending out the sending-out IP packet 1610 cannot be decided uniquely, whereby the operation proceeds to a Step 310.

In the Step 310, it is determined whether the second candidate search has been completed. Specifically, if the counter value j becomes equalized to the count value m, it follows that the second candidate search has been completed. In a case where the count value j is not equal to m (Step 310: NO), it firstly acquires the communication interface of the j-th entry of the first candidate list (Step 311). Next, it acquires an assignment IP address corresponding to the communication interface acquired in the Step 310 from the IF address management table 1322 (Step 312). Continuously, it compares the transmission source IP address of the sending-out IP packet 1610 with the assignment IP address acquired in the Step 311 (Step 313), and in a case where the transmission source IP address of the sending-out IP packet 1610 and the assignment IP address coincide with each other (Step 313, YES), it copies the communication interface acquired in the Step 311 into the n-th entry of the second candidate list (Step 314), and it increases the value of the count value n by 1 (Step 315). Further, it increases the value of the count value j by 1 (Step 316), and the operation shifts to the process of the next entry of the first candidate list. In a case where the transmission source IP address of the sending-out IP packet 1610 and the assignment IP address do not coincide with each other (Step 313, NO), the operation proceeds to a Step 316 as it stands.

Repeating the steps from the Step 310 to the Step 316 allows each entry to be processed in the ascending order beginning with the first entry of the first candidate list. And, when the process of the final entry is reached (Step 310: YES), the operation proceeds to a Step 317 for a purpose of determining whether the entry exists in the second candidate list.

It is determined whether the second candidate exists, specifically, based upon the value of the count value n. The so-called value of the count value n being "0" signifies that the communication interface that can send out the sending-out IP packet 1610 exists in the first candidate list; however it has not been decided uniquely. The so-called value of the count value n being "1" signifies that the communication interface that can send out the sending-out IP packet 1610 is decided uniquely. The so-called value of the count value n being "2" or more signifies that the communication interface that can send out the sending-out IP packet 1610 exists in the second candidate list; however it has not been decided uniquely.

In a case where the value of the count value n is "1" (Step 317: YES), it acquires the communication interface from the first entry of the second candidate list (Step 318), and employs the acquired communication interface to send out the sending-out IP packet 1610 (Step 322), and the operation is ended (END). In a case where the value of the count value n is not "1" (Step 317: NO), the operation proceeds to a Step 319.

Next, in a case where the value of the count value n is "0" (Step 319: YES), the transmission IF determination/sending-out processing unit 1320 acquires the communication interface from the arbitrary entry of the first candidate list (Step 320), and employs the acquired communication interface to send out the sending-out IP packet 1610 (Step 322), and the operation is ended (END). In a case where the value of the count value n is not "0" (Step 319: NO), it acquires the communication interface from the arbitrary entry of the second candidate list (Step 321), and employs the acquired communication interface to send out the sending-out IP packet 1610 (Step 322), and the operation is ended (END).

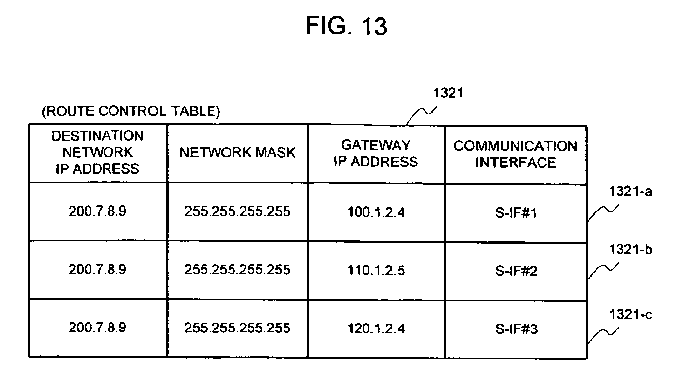

Herein, "200.7.8.9" has been filed into the destination IP address within the IP header of the sending-out IP packet 1610, and "110.1.2.3" into the transmission source IP address, respectively. Thus, each of 1321-a, 1321-b, and 1321-c, being an entry of the route control table 1321 shown in Fig. 13, comes under the first candidate, and in the stage of executing the Step 307, the content of the entry 1321-a of the route control table 1321 is filed into the first entry of the first candidate list, the content of the entry 1321-b of the route control table 1321 into the second entry of the first candidate list, and the content of the entry 1321-c of the route control table 1321 into the third entry of the first candidate list, respectively. Further, "3" is filed into the count value m. Further, in the process of the Step 312, "100.1.2.3" is acquired as an assignment IP address in case of j=1, "110.1.2.3" in case of j=2, and "120.1.2.3" in case of j=3, respectively. Further, in the stage of executing the Step 317, only "S-IF#2" is filed into the second candidate list as a communication interface, and "1" is filed into the count value. That is, as a result of the determination by the process of the Step 317, it follows that the process of the Step 318 is executed, "S-IF#2" is acquired as a communication interface in the Step 318, and the transmission IF determination/sending-out processing unit 1320 employs "S-IF#2 1310-2", being a communication interface corresponding to the route having the route number "3" selected by the scheduling unit 313-2, to send out the sending-out IP packet 1610.

Resultantly, the sending-out IP packet 1610 is sent out from S-IF#2 1310-2, being a communication interface, and is received by R-IF 1500-1, being a communication interface with which the reception node 101-2 is equipped, via the carrier network GW 1400-3.

Executing the procedure explained above makes it possible to transmit the IP packet by employing the route decided in the scheduling unit 313-2 also in a case of the IP network configuration in which each of the transmission node 100-2 and the reception node 101-2 is equipped with a plurality of the communication interfaces each having no one-versus-one correspondence, and yet the separate IP address has been assigned to each communication interface, which is the case with this embodiment. Further, it is also possible to perform the IP routing process for the IP packet, into which the transmission source IP address has not been filed in particular, and which expects the IP routing by the prior art.

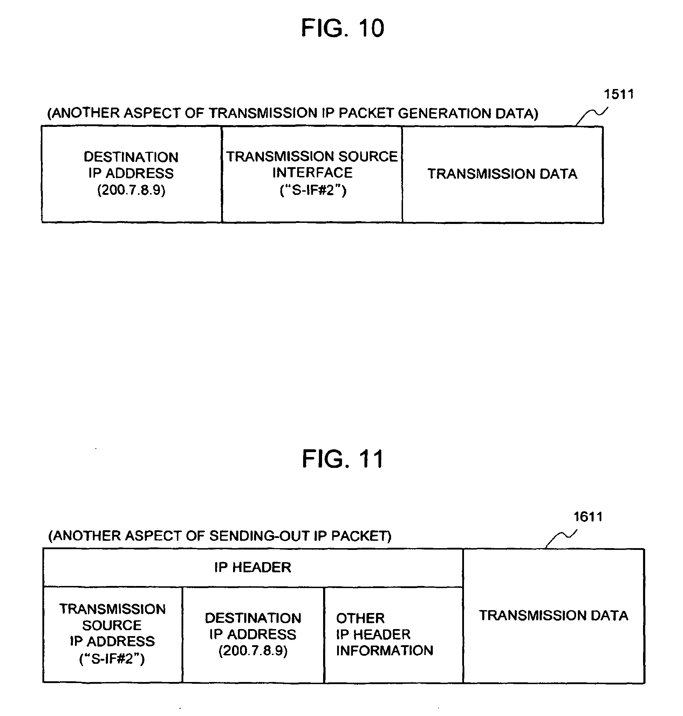

Further, in addition hereto, as another embodiment, with the internal configuration of the transmission node 100-2, it is also possible that the transmission IP packet generation data, which the scheduling unit 313-2 delivers to the IP packet generation unit 1316 after selecting the route of which the communication route number is "3" as a communication route, assumes a format shown in Fig. 10.

In Fig. 10, transmission IP packet generation data 1511 in this embodiment is shown. The scheduling unit 313-2 files the IP address "200.7.8.9" of the communication interface 1500-1 of the reception node 101-2 as a "destination IP address" of the transmission IP packet generation data 1511, and further files the communication interface name "S-IF#2" corresponding to the communication route number "3" acquired from the route ⇔ communication-interface correspondence table 1330 as a "transmission source interface" of the transmission IP packet generation data 1511.

Upon receipt of the transmission IP packet generation data 1511, the IP packet generation unit 1316 prepares a sending-out IP packet 1611 shown in Fig. 11, and adds it to the IP packet queuing unit 1317. In the sending-out IP packet 1611, "S-IF#2", being a communication interface name, is filed into the "transmission source IP address" field of the IP header, and the IP address "200.7.8.9" of R-IF 1500-1, being a communication interface of the reception node 101-2, into the "destination IP address" field of the IP header, respectively, based upon information that is contained in the received transmission IP packet generation data 1511.

Next, the transmission IF determination/sending-out processing unit 1320 that exists in the IP routing processing unit 1318 takes out the sending-out IP packet 1611 from the IP packet queuing unit 1317, employs the route control table 1321 and the IF address management table 1322 to decide the communication interface through which the sending-out IP packet is delivered, and executes the sending-out process.

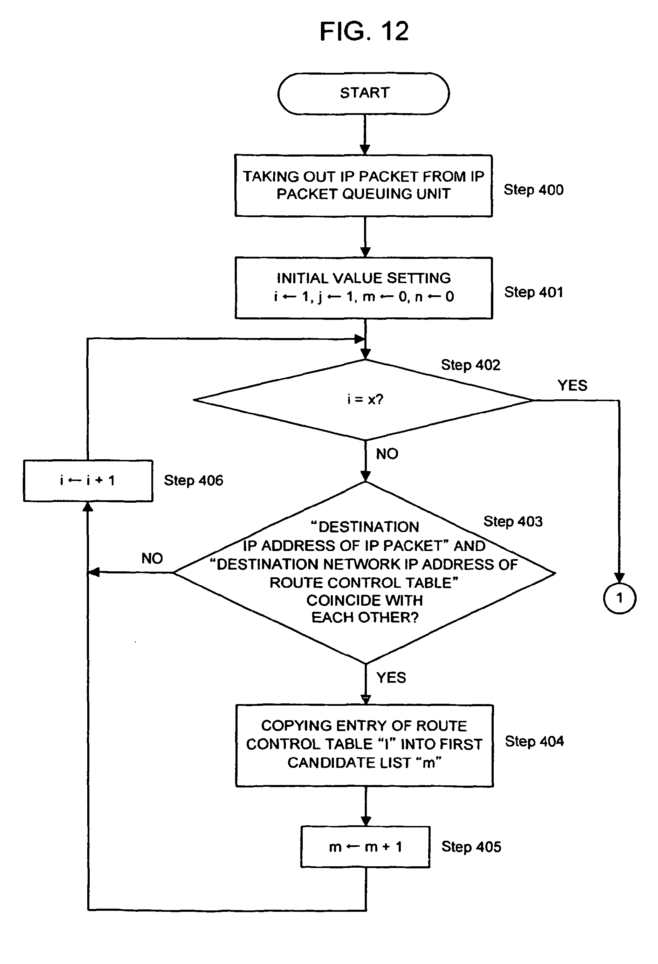

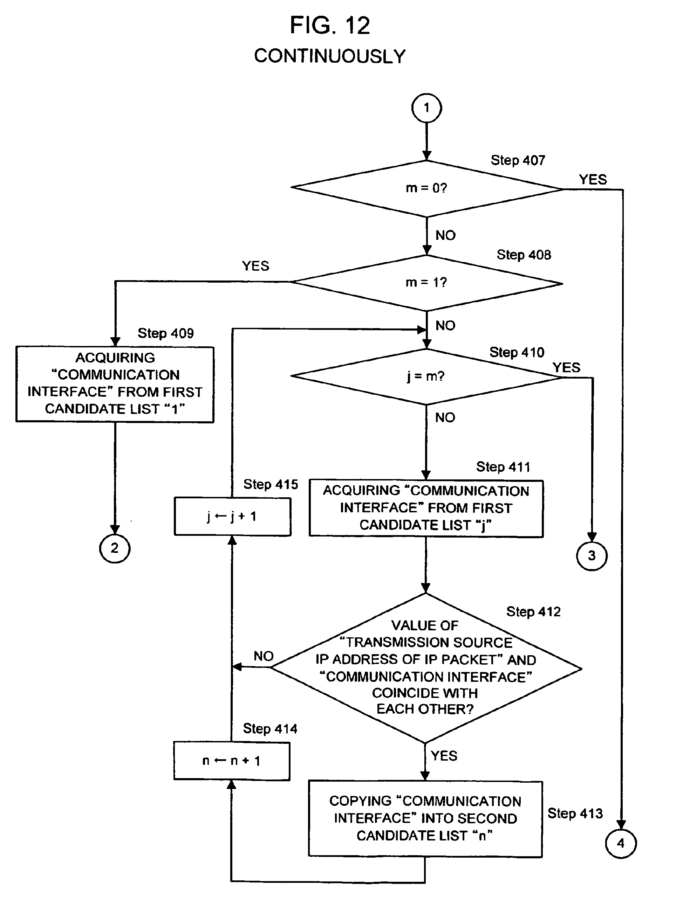

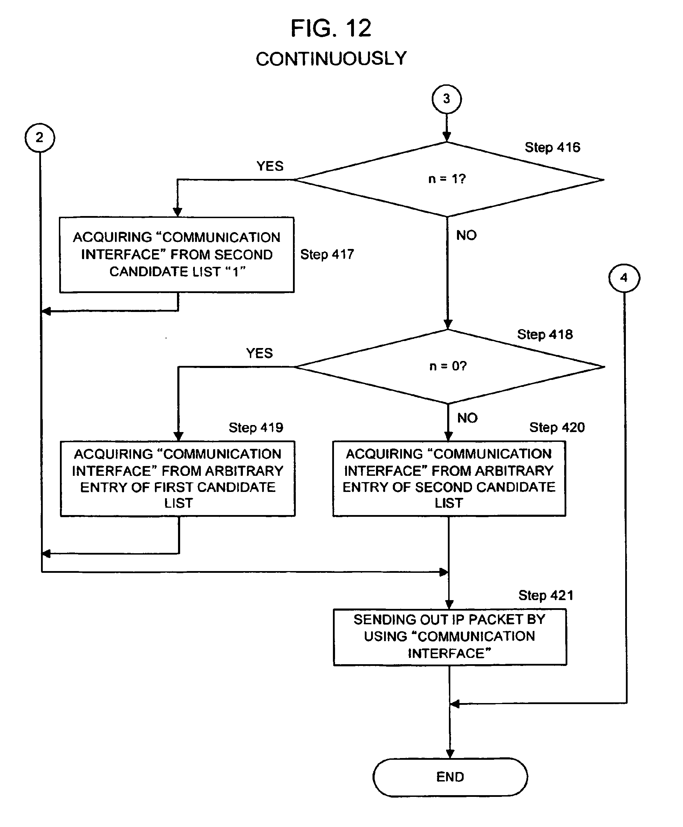

Fig. 12 signifies a flow of deciding the transmission IF by the transmission IF determination/sending-out processing unit 1320 in this embodiment. Also in this embodiment, when the route control table 1321 in use is configured of the entry number x, the transmission IF determination/sending-out processing unit 1320 prepares as a variable a count value i indicating which entry of the route control table 1321 is assumed to an object of the process in terms of the entry order in performing a research process under a first condition, a first candidate list, being an array into which the entries of the route control table selected as a transmission candidate under the first condition are filed, a count value m indicating the number of the entries filed into the first candidate list, a count value j indicating which entry of the first candidate list is assumed to be an object of the process in terms of the entry order in performing a selection process under a second condition, a second candidate list, being an array into which the transmission interfaces selected as a transmission candidate under the second condition are filed, and a count value n indicating the number of the entries filed into the second candidate list. At first, it takes out the sending-out IP packet 1611 from the IP packet queuing unit 1317 (Step 400). And, it sets "1" to the count values i and j, respectively, and "0" to the count values m and n, respectively, as an initial value (Step 401), and the operation proceeds to a step 402.

Next, the transmission IF determination/sending-out processing unit 1320 compares the count value i with x, and determines whether the first candidate search has been completed (Step 402). Specifically, if the value i becomes equalized to the value of x, it follows that the first candidate search has been completed. In a case where the value i is not equal to the value of x (Step 402: NO), it compares the value filed into the destination IP address of the sending-out IP packet 1611 with the value filed into the destination network IP address of the i-th entry of the route control table (Step 403). In a case where they coincide with each other as a result of the comparison (Step 403: YES), it copies the content of the i-th entry of the route control table into the m-th entry of the first candidate list (Step 404). And, it increases the value of the count value m by 1 (Step 405). Further, it increases the value of the count value i by 1 (Step 406), and the operation shifts to the process of the next route control table entry. In a case where the value filed into the destination IP address of the sending-out IP packet 1611 and the value filed into the destination network IP address of the i-th entry of the route control table do not coincide with each other (Step 403: NO), the operation proceeds to a Step 406 as it stands.

Repeating the steps from the Step 402 to the Step 406 allows each entry to be processed in the ascending order beginning with the first entry of the route control table. And, when the process of the final entry is reached (Step 402: YES), the operation proceeds to a Step 407 for a purpose of determining whether the entry exists in the first candidate list.

It is determined whether the first candidate exists, specifically, based upon the value of the count value m. In a case where the value of the count value m is "0" (Step 407: YES), the communication interface for sending out the sending-out IP packet 1611 does not exist, whereby the process is ended (END). In a case where the value of the count value m is a value other than "0" (Step 407: NO), it follows that the first candidate exists, whereby the operation proceeds to the process of a Step 408. Next, the transmission IF determination/sending-out processing unit 1320 determines whether the count value m is "1" (Step 408). In a case where the value of the count value m is "1" (Step 408: YES), the communication interface for sending out the sending-out IP packet 1611 is decided uniquely, whereby it acquires the communication interface recorded in the first entry of the first candidate list (Step 409), and employs the acquired communication interface to send out the sending-out IP packet 1611 (Step 422), and the operation is ended (END). In a case where the value of the count value m is not "1" (Step 408: NO), the communication interface for sending out the sending-out IP packet 1611 cannot be decided uniquely, whereby the operation proceeds to a Step 410.

In the Step 410, it is determined whether the second candidate search has been completed. Specifically, if the count value j becomes equalized to the count value m, it follows that the second candidate search has been completed. In a case where the count value j is not equal to m (Step 410: NO), the transmission IF determination/sending-out processing unit 1320 firstly acquires the communication interface of the j-th entry of the first candidate list (Step 411). Next, it compares the communication interface filed into the transmission source IP address of the sending-out IP packet 1611 with the communication interface acquired in the Step 411 (Step 412), and in a case where they coincide with each other (Step 412, YES), it copies the communication interface acquired in the Step 411 into the n-th entry of the second candidate list (Step 413), and increases the value of the count value n by 1 (Step 414). Further, it increases the value of the count value j by 1 (Step 415), and the operation shifts to the process of the next entry of the first candidate list. In a case where the communication interface filed into the transmission source IP address of the sending-out IP packet 1611 and the communication interface acquired in the Step 411 do not coincide with each other (Step 412, NO), the operation proceeds to a Step 415 as it stands.

Repeating the steps from the Step 410 to the Step 415 allows each entry to be processed in the ascending order beginning with the first entry of the first candidate list. And, when the process of the final entry is reached (Step 410: YES), the operation proceeds to a Step 417 for a purpose of determining whether the entry exists in the second candidate list.

It is determined whether the second candidate exists, specifically, based upon the value of the count value n. The so-called value of the count value n being "0" signifies that the communication interface that can send out the sending-out IP packet 1611 exists in the first candidate list; however it has not been decided uniquely. The so-called value of the count value n being "1" signifies that the communication interface that can send out the sending-out IP packet 1611 is decided uniquely. The so-called value of the count value n being "2" or more signifies that the communication interface that can send out the sending-out IP packet 1611 exists in the second candidate list; however it has not been decided uniquely.

In a case where the value of the count value n is "1" (Step 416: YES), the transmission IF determination/sending-out processing unit 1320 acquires the communication interface from the first entry of the second candidate list (Step 417), and employs the acquired communication interface to send out the sending-out IP packet 1611 (Step 421), and the operation is ended (END). In a case where the value of the count value n is not "1" (Step 416: NO), the operation proceeds to a Step 419.

Next, in a case where the value of the count value n is "0" (Step 418: YES), the transmission IF determination/sending-out processing unit 1320 acquires the communication interface from the arbitrary entry of the first candidate list (Step 419), and employs the acquired communication interface to send out the sending-out IP packet 1611 (Step 421), and the operation is ended (END). In a case where the value of the count value n is not "0" (Step 418: NO), it acquires the communication interface from the arbitrary entry of the second candidate list (Step 420), and employs the acquired communication interface to send out the sending-out IP packet 1611 (Step 421), and the operation is ended (END).

Herein, "200.7.8.9", and "S-IF#2", being an identifier that is not an IP address as a matter of fact, have been filed into the destination IP address within the IP header of the sending-out IP packet 1611 and the transmission source IP address, respectively. Thus, each of 1321-a, 1321-b, and 1321-c, being an entry of the route control table 1321, comes under the first candidate, and in the stage of executing the process of the Step 407, the content of the entry 1321-a of the route control table 1321 is filed into the first entry of the first candidate list, the content of the entry 1321-b of the route control table 1321 into the second entry of the first candidate list, and the content of the entry 1321-c of the route control table 1321 into the third entry of the first candidate list, respectively. Further, "3" is filed into the count value m. Further, in the stage of executing the process of the Step 416, only "S-IF#2" is filed as a communication interface into the second candidate list, and "1" into the count value. That is, as a result of the determination by the process of the Step 417, it follows that the process of the Step 418 is executed, "S-IF#2" is acquired as a communication interface in the Step 418, and the transmission IF determination/sending-out processing unit 1320 employs "S-IF#2 1310-2", being a communication interface corresponding to the route having the route number "3" selected by the scheduling unit 313-2, to send out the sending-out IP packet 1611.

Resultantly, the sending-out IP packet 1611 is sent out from S-IF#2 1310-2, being a communication interface, and is received by R-IF 1500-1, being a communication interface with which the reception node 101-2 is equipped, via the carrier network GW 1400-3.

Also in this embodiment, executing the procedure explained above makes it possible to transmit the IP packet by employing the route decided in the scheduling unit 313-2 also in a case of the IP network configuration in which each of the transmission node 100-2 and the reception node 101-2 is equipped with a plurality of the communication interfaces each having no one-versus-one correspondence, and yet the separate IP address has been assigned to each communication interface.

Further, it is also possible to perform the IP routing process for the IP packet as well, of which the communication interface is not designated in particular, and which expects the IP routing by the prior art.

Additionally, in the foregoing embodiments, it was assumed that the communication interfaces S-IF#1 1310-1 to S-IF#3 1310-3 belonged to different wireless networks 1300-1 to 1300-3, respectively; however it is not limited hereto and the entirety or one part of the communication interfaces S-IF#1 1310-1 to S-IF#3 1310-3 may belong to a wire network.

## Claims

1. A communication device comprising a plurality of communication interfaces each having a separate address, said communication device being used under a communication environment in which a transmission packet that does not designate the communication interface and a transmission packet that designates the communication interface coexist, comprising:
a first table in which an identifier of each communication interface of said plurality of communication interfaces and each destination address of said plurality of communication interfaces are stored correspondingly to each other, each of said destination addresses being reached via its communication interface;
a second table in which an identifier of each communication interface of said plurality of communication interfaces and an assignment address of each communication interface of said plurality of communication interfaces are stored correspondingly to each other; and
a routing means for:
selecting as a plurality of candidate entries the identifiers of a plurality of the communication interfaces corresponding to the destination address that coincides with the destination address of a transmission packet from said first table;
in a case where said candidate entry exists in a plural number and yet said transmission packet contains information of a transmission source address or the identifier of the communication interface to be used, selecting from among said candidate entries one identifier, out of the identifiers of the communication interfaces having the assignment address that coincides with said transmission source address of the transmission packet or the identifier of the communication interface that coincides with the identifier of the communication interface within said transmission packet from among said candidate entries by making a reference to said second table to send out said transmission packet by employing the communication interface corresponding to the selected identifier of the communication interface; and
in a case where said transmission packet does not contain information of the transmission source address or the identifier of the communication interface to be used, selecting an arbitrary identifier from among said candidate entries to send out said transmission packet by employing the communication interface having the selected identifier.

2. The communication device according to claim 1, **characterized in that** said each separate address is an IP address.

3. A communication method for use in a communication device comprising a plurality of communication interfaces each having a separate address that is used under a communication environment in which a transmission packet that does not designate the communication interface and a transmission packet that designates the communication interface coexist, said routing communication device including a first table in which an identifier of each communication interface of said plurality of communication interfaces and each destination address of said plurality of communication interfaces are stored correspondingly to each other, each of said destination addresses being reached via its communication interface and a second table in which an identifier of each communication interface of said plurality of communication interfaces and an assignment address of each communication interface of said plurality of communication interfaces are stored correspondingly to each other, said communication method comprising:
selecting as a plurality of candidate entries the identifiers of a plurality of the communication interfaces corresponding to the destination address that coincides with the destination address of a transmission packet from said first table;
in a case where said candidate entry exists in a plural number and yet said transmission packet contains information of a transmission source address or the identifier of the communication interface to be used, selecting from among said candidate entries one identifier, out of the identifiers of the communication interfaces having the assignment address that coincides with said transmission source address of the transmission packet or the identifier of the communication interface that coincides with the identifier of the communication interface within said transmission packet from among said candidate entries by making a reference to said second table to send out said transmission packet by employing the communication interface corresponding to the selected identifier of the communication interface; and
in a case where said transmission packet does not contain information of the transmission source address or the identifier of the communication interface to be used, selecting an arbitrary identifier from among said candidate entries to send out said transmission packet by employing the communication interface having the selected identifier.

4. The communication method according to claim 3, **characterized in that** said each separate address is an IP address.

5. A program of a communication device for executing the communication method of claim 3.

6. The program of the communication device according to claim 5, **characterized in that** said each separate address is an IP address.

## Patentansprüche

1. Kommunikationseinrichtung umfassend eine Mehrzahl Kommunikationsschnittstellen, von denen jede eine separate Adresse aufweist, wobei die Kommunikationseinrichtung in einer Kommunikationsumgebung benutzt wird, in der ein Übertragungspaket, das die Kommunikationsschnittstelle nicht bestimmt, und ein Übertragungspaket, dass die Kommunikationsschnittstelle bestimmt, koexistieren, umfassend:
eine erste Tabelle, in der ein Kennzeichner jeder Kommunikationsschnittstelle der Mehrzahl Kommunikationsschnittstellen und jede Zieladresse der Mehrzahl Kommunikationsschnittstellen einander entsprechend gespeichert sind, wobei jede der Zieladressen über ihre Kommunikationsschnittstelle erreicht wird;
eine zweite Tabelle, in der ein Kennzeichner jeder Kommunikationsschnittstelle der Mehrzahl Kommunikationsschnittstellen und eine Zuweisungsadresse jeder Kommunikationsschnittstelle der Mehrzahl Kommunikationsschnittstellen einander entsprechend gespeichert sind; und
ein Routingmittel zum
Auswählen der Kennzeichner einer Mehrzahl der Kommunikationsschnittstellen als eine Mehrzahl Kandidateneinträge entsprechend der Zieladresse, die mit der Zieladresse eines Übertragungspakets aus der ersten Tabelle übereinstimmt;
in einem Fall, in dem der Kandidateneintrag mehrfach existiert und das Übertragungspaket trotzdem Informationen einer Übertragungsquellenadresse oder den Kennzeichner der zu verwendenden Kommunikationsschnittstelle enthält, Auswählen eines Kennzeichners unter den Kandidateneinträgen aus den Kennzeichnern der Kommunikationsschnittstellen mit der Zuweisungsadresse, die mit der Übertragungsquellenadresse des Übertragungspaket übereinstimmt, oder dem Kennzeichner der Kommunikationsschnittstelle, der mit dem Kennzeichner der Kommunikationsschnittstelle in dem Übertragungspaket unter den Kandidateneinträgen übereinstimmt, indem Bezug auf die zweite Tabelle genommen wird, um das Übertragungspaket durch Einsetzen der Kommunikationsschnittstelle zu senden, die dem ausgewählten Kennzeichner der Kommunikationsschnittstelle entspricht; und
in einem Fall, in dem das Übertragungspaket keine Informationen der Übertragungsquellenadresse oder den Kennzeichner der zu verwendenden Kommunikationsschnittstelle enthält, Auswählen eines beliebigen Kennzeichners aus den Kandidateneinträgen, um das Übertragungspaket durch Einsetzen der Kommunikationsschnittstelle mit dem ausgewählten Kennzeichner zu senden.

2. Kommunikationseinrichtung nach Anspruch 1, **dadurch gekennzeichnet, dass** jede separate Adresse eine IP-Adresse ist.

3. Kommunikationsverfahren zur Verwendung in einer Kommunikationseinrichtung umfassend eine Mehrzahl Kommunikationsschnittstellen, von denen jede eine separate Adresse aufweist, die in einer Kommunikationsumgebung benutzt wird, in der ein Übertragungspaket, das die Kommunikationsschnittstelle nicht bestimmt, und ein Übertragungspaket, dass die Kommunikationsschnittstelle bestimmt, koexistieren, wobei die Routingkommunikationseinrichtung
eine erste Tabelle, in der ein Kennzeichner jeder Kommunikationsschnittstelle der Mehrzahl Kommunikationsschnittstellen und jede Zieladresse der Mehrzahl Kommunikationsschnittstellen einander entsprechend gespeichert sind, wobei jede der Zieladressen über ihre Kommunikationsschnittstelle erreicht wird, und eine zweite Tabelle, in der ein Kennzeichner jeder Kommunikationsschnittstelle der Mehrzahl Kommunikationsschnittstellen und eine Zuweisungsadresse jeder Kommunikationsschnittstelle der Mehrzahl Kommunikationsschnittstellen einander entsprechend gespeichert sind, umfasst, wobei das Kommunikationsverfahren umfasst:
Auswählen der Kennzeichner einer Mehrzahl der Kommunikationsschnittstellen als eine Mehrzahl Kandidateneinträge entsprechend der Zieladresse, die mit der Zieladresse eines Übertragungspakets aus der ersten Tabelle übereinstimmt;
in einem Fall, in dem der Kandidateneintrag mehrfach existiert und das Übertragungspaket trotzdem Informationen einer Übertragungsquellenadresse oder den Kennzeichner der zu verwendenden Kommunikationsschnittstelle enthält, Auswählen eines Kennzeichners unter den Kandidateneinträgen aus den Kennzeichnern der Kommunikationsschnittstellen mit der Zuweisungsadresse, die mit der Übertragungsquellenadresse des Übertragungspaket übereinstimmt, oder dem Kennzeichner der Kommunikationsschnittstelle, der mit dem Kennzeichner der Kommunikationsschnittstelle in dem Übertragungspaket unter den Kandidateneinträgen übereinstimmt, indem Bezug auf die zweite Tabelle genommen wird, um das Übertragungspaket durch Einsetzen der Kommunikationsschnittstelle zu senden, die dem ausgewählten Kennzeichner der Kommunikationsschnittstelle entspricht; und
in einem Fall, in dem das Übertragungspaket keine Informationen der Übertragungsquellenadresse oder den Kennzeichner der zu verwendenden Kommunikationsschnittstelle enthält, Auswählen eines beliebigen Kennzeichners aus den Kandidateneinträgen, um das Übertragungspaket durch Einsetzen der Kommunikationsschnittstelle mit dem ausgewählten Kennzeichner zu senden.

4. Kommunikationsverfahren nach Anspruch 3, **dadurch gekennzeichnet, dass** jede separate Adresse eine IP-Adresse ist.

5. Programm einer Kommunikationseinrichtung zum Ausführen des Kommunikationsverfahrens nach Anspruch 3.

6. Programm der Kommunikationseinrichtung nach Anspruch 5, **dadurch gekennzeichnet, dass** jede separate Adresse eine IP-Adresse ist.

## Revendications

1. Dispositif de communication comprenant une pluralité d'interfaces de communication ayant chacune une adresse distincte, ledit dispositif de communication étant utilisé sous un environnement de communication dans lequel un paquet de transmission qui ne désigne pas l'interface de communication et un paquet de transmission qui désigne l'interface de communication coexistent, comprenant :
une première table dans laquelle un identificateur de chaque interface de communication de ladite pluralité d'interfaces de communication et chaque adresse de destination de ladite pluralité d'interfaces de communication sont stockés en correspondance l'un avec l'autre, chacune desdites adresses de destination étant atteinte via son interface de communication ;
une seconde table dans laquelle un identificateur de chaque interface de communication de ladite pluralité d'interfaces de communication et une adresse d'affectation de chaque interface de communication de ladite pluralité d'interfaces de communication sont stockés en correspondance l'un avec l'autre ; et
un moyen de routage pour :
sélectionner comme une pluralité d'entrées candidates les identificateurs d'une pluralité des interfaces de communication correspondant à l'adresse de destination qui coïncide avec l'adresse de destination d'un paquet de transmission en provenance de ladite première table ;
dans un cas où ladite entrée candidate existe dans un nombre pluriel et néanmoins ledit paquet de transmission contient des informations d'une adresse source de transmission ou de l'identificateur de l'interface de communication à utiliser, sélectionner parmi lesdites entrées candidates un identificateur, des identificateurs des interfaces de communication ayant l'adresse d'affectation qui coïncide avec ladite adresse source de transmission du paquet de transmission ou l'identificateur de l'interface de communication qui coïncide avec l'identificateur de l'interface de communication à l'intérieur dudit paquet de transmission parmi lesdites entrées candidates en faisant une référence à ladite seconde table pour envoyer ledit paquet de transmission en employant l'interface de communication correspondant à l'identificateur sélectionné de l'interface de communication ; et
dans un cas où ledit paquet de transmission ne contient pas d'informations de l'adresse source de transmission ou de l'identificateur de l'interface de communication à utiliser, sélectionner un identificateur arbitraire parmi lesdites entrées candidates pour envoyer ledit paquet de transmission en employant l'interface de communication ayant l'identificateur sélectionné.

2. Dispositif de communication selon la revendication 1, **caractérisé en ce que** ladite chaque adresse distincte est une adresse IP.

3. Procédé de communication destiné à être utilisé dans un dispositif de communication comprenant une pluralité d'interfaces de communication ayant chacune une adresse distincte qui est utilisé sous un environnement de communication dans lequel un paquet de transmission qui ne désigne pas l'interface de communication et un paquet de transmission qui désigne l'interface de communication coexistent, ledit dispositif de communication de routage comprenant une première table dans laquelle un identificateur de chaque interface de communication de ladite pluralité d'interfaces de communication et chaque adresse de destination de ladite pluralité d'interfaces de communication sont stockés en correspondance l'un avec l'autre, chacune desdites adresses de destination étant atteinte via son interface de communication et une seconde table dans laquelle un identificateur de chaque interface de communication de ladite pluralité d'interfaces de communication et une adresse d'affectation de chaque interface de communication de ladite pluralité d'interfaces de communication sont stockés en correspondance l'un avec l'autre ; ledit procédé de communication comprenant :
la sélection comme une pluralité d'entrées candidates des identificateurs d'une pluralité des interfaces de communication correspondant à l'adresse de destination qui coïncide avec l'adresse de destination d'un paquet de transmission en provenance de ladite première table ;
dans un cas où ladite entrée candidate existe dans un nombre pluriel et néanmoins ledit paquet de transmission contient des informations d'une adresse source de transmission ou de l'identificateur de l'interface de communication à utiliser, la sélection parmi lesdites entrées candidates d'un identificateur, des identificateurs des interfaces de communication ayant l'adresse d'affectation qui coïncide avec ladite adresse source de transmission du paquet de transmission ou de l'identificateur de l'interface de communication qui coïncide avec l'identificateur de l'interface de communication à l'intérieur dudit paquet de transmission parmi lesdites entrées candidates en faisant une référence à ladite seconde table pour envoyer ledit paquet de transmission en employant l'interface de communication correspondant à l'identificateur sélectionné de l'interface de communication ; et
dans un cas où ledit paquet de transmission ne contient pas d'informations de l'adresse source de transmission ou de l'identificateur de l'interface de communication à utiliser, la sélection d'un identificateur arbitraire parmi lesdites entrées candidates pour envoyer ledit paquet de transmission en employant l'interface de communication ayant l'identificateur sélectionné.

4. Procédé de communication selon la revendication 3, **caractérisé en ce que** ladite chaque adresse distincte est une adresse IP.

5. Programme d'un dispositif de communication pour exécuter le procédé de communication selon la revendication 3.

6. Programme du dispositif de communication selon la revendication 5, **caractérisé en ce que** ladite chaque adresse distincte est une adresse IP.
